# EUROPEAN PATENT SPECIFICATION

(11) **EP 2 425 123 B1**
(45) Date of publication and mention of the grant of the patent: **27.03.2013**
(21) Application number: 10723800.8
(22) Date of filing: 04.05.2010
(51) Int. Cl.: F03B 13/18, F03B 17/06

(54) **A WATER POWERED ELECTRICAL GENERATOR**
WASSERBETRIEBENER ELEKTRISCHER GENERATOR
GÉNÉRATEUR ÉLECTRIQUE ALIMENTÉ PAR EAU

(30) Priority: 01.05.2009 IE 20090346
(43) Date of publication of application: 07.03.2012
(73) Proprietor: Limerick Wave Limited, Castletroy, County Limerick (IE)
(72) Inventor: KELLY, Patrick Joseph, Castletroy County Limerick (IE)
(74) Representative: Gorman, Francis Fergus
(86) International application number: PCT/IE2010/000033
(87) International publication number: WO 2010/125552

(56) References cited:
- EP-A1- 2 282 049
- WO-A1-2005/054668
- GB-A- 2 164 097
- US-A- 5 051 059
- US-A1- 2003 110 767
- US-B1- 6 935 832

## Description

The present invention relates to a water powered electrical generator, and in particular, though not limited to a water powered electrical generator for generating electricity from motion in water, for example, and typically, wave or tidal motion in the sea.

With the ever increasing cost and decreasing availability of hydrocarbon fuels, the extraction of energy from wind and waves is becoming increasingly more important. Many wave powered electrical generators are known. Such wave powered generators, in general, float on the sea and extract energy from passing waves, which is then converted, typically, to electrical energy. One such type of wave powered electrical generator comprises a hollow floatable body which comprises an air chamber. The air chamber communicates with the water, and the water level in the air chamber rises and falls in the air chamber as a result of passing waves. The rise and fall of the water level in the air chamber results in air being alternately expelled and drawn into the air chamber. The air as it is being urged into and out of the air chamber is passed through a turbine, which in turn drives an electrical power generator which produces electrical power. An alternative wave powered electrical generator comprises two or more floatable bodies pivotally coupled together to pivot relative to each other in response to passing waves. Hydraulic or pneumatic rams are operably coupled between the floatable bodies, so that as the floatable bodies pivot relative to each other, a piston in each hydraulic or pneumatic ram urges hydraulic fluid or air, as the case may be, into and out of the rams. The hydraulic fluid or air as it is being urged into and out of the rams is used to power a turbine, which in turn drives an electrical power generator. In an alternative version of this type of wave powered electrical generator, the action of the piston in each ram as the floatable bodies pivot relative to each other is used to either pressurise hydraulic fluid or compress air, and the pressurised hydraulic fluid or the compressed air is then used to drive a turbine, which in turn drives an electrical power generator.

However, the majority of these known wave powered electrical generators suffer from various disadvantages, and one such disadvantage is that by their very nature they are exposed to passing waves. Thus, in stormy seas they are prone to damage.

British Published Patent Application Specification No. 2,164,097 of Momeny discloses a wave powered generator which comprises immersed floats which are oscillatably mounted on shafts which are rigidly coupled to a support frame. Paddles extending from the floats rock the floats to and fro on the shafts in response to passing waves. An electromechanical generator is located within each float and is driven through a unidirectional mechanical transmission in response to the rocking oscillating motion of the corresponding float.

PCT Published Application Specification No. WO 2005/054668 of Serrano Molina discloses a wave powered generator which comprises a pair of drums rotatably carried on respective shafts which are integral with a support structure. Cables which are coupled to a submerged anchorage are wound around the drums, so that as the support structure with the floats rises and falls in response to passing waves, the cables are sequentially wound onto and unwound from the drums to in turn rotate the drums on the respective shafts. A drive transmission transmits the rotational motion of the drums to electrical generators located within the respective drums.

Only limited development work has been carried out in connection with tidal power generators.

There is therefore a need for a water powered electrical generator which addresses at least some of the problems of known water powered electrical generators, such as wave powered electrical generators and tidal powered electrical generators.

The present invention is directed towards providing a water powered electrical generator.

According to the invention there is provided a water powered electrical generator comprising a drum rotatably mounted on a non-rotatable main shaft about a main rotational axis, and being configurable to one of oscillate and rotate about the main rotational axis in response to motion of water, a carrier means rigidly supported on the main shaft within the drum carrying an electrical power generating means, and a drive transmission means operably coupling the drum to the electrical power generating means for transmitting drive from the drum to the electrical power generating means in response to the one of the oscillating and rotational motion of the drum on the main shaft, wherein the drive transmission means comprises a flywheel rotatably mounted on the main shaft.

In one embodiment of the invention the drive transmission means is configured to drive the electrical power generating means in one rotational direction only. Preferably, the drive transmission means is configured to drive the electrical power generating means in the one rotational direction only in response to the one of the oscillating and rotational motion of the drum in one rotational direction. Ideally, the drive transmission means is configured to drive the electrical power generating means in the one rotational direction only in response to the one of the oscillating and rotational motion of the drum in both rotational directions.

In another embodiment of the invention, the flywheel is located within the drum.

In another embodiment of the invention the drive transmission means comprises a primary drive transmission means for transmitting drive from the drum to the flywheel. Preferably, the primary drive transmission means comprises a first primary transmission means adapted to transmit drive from the drum to the flywheel in the one rotational direction only. Advantageously, the first primary transmission means comprises a first one-way drive transmission means adapted to transmit drive therethrough in one rotational direction only.

In one embodiment of the invention the first primary transmission means comprises a first primary gear train, and the first one-way drive transmission means is located in the first primary gear train.

In another embodiment of the invention the first primary transmission means comprises a first primary pinion rigidly carried on a rotatable first primary drive shaft, the first primary pinion being engageable with a first primary drive gear coupled to the drum. Preferably, the first primary drive gear is coaxial with the main rotational axis. Advantageously, the first primary drive gear is rigidly coupled to the drum. Ideally, the first primary drive gear comprises one of an internally toothed gear and an externally toothed gear.

In another embodiment of the invention the first primary transmission means comprises a first primary driven element coupled to the flywheel and coaxial therewith. Preferably, the first primary driven element is rigidly coupled to the flywheel.

Preferably, the first primary transmission means comprises a first primary transmission element adapted to transmit drive from the first primary drive shaft to the first primary driven element. Advantageously, the first primary transmission element co-operates with the first primary driven element for transmitting drive from the first primary drive shaft to the first primary driven element. Preferably, the first primary drive shaft is co-operable with the first primary transmission element for transmitting drive from the first primary drive shaft to the first primary transmission element. Advantageously, the first one-way drive transmission means is carried on the first primary drive shaft, and the first primary transmission element is driven by the first primary drive shaft through the first one-way drive transmission means.

In one embodiment of the invention the first primary transmission element comprises a first primary transmission gear, and the first primary driven element comprises a first primary driven gear. Alternatively, the first primary transmission element comprises a first primary transmission pulley wheel, and the first primary driven element comprises a first primary driven pulley wheel, and a first primary transmission belt transmits drive from the first primary transmission pulley wheel to the first primary driven pulley wheel.

Preferably, the first primary drive shaft is rotatably mounted in the carrier means.

In one embodiment of the invention the first one-way drive transmission means comprises a first cam clutch element.

Preferably, the first primary transmission means is located within the drum.

In another embodiment of the invention the drive transmission means comprises a secondary drive transmission means for transmitting drive from the flywheel to the electrical power generating means. Preferably, the secondary drive transmission means is adapted to receive drive from the flywheel through the primary drive transmission means.

In one embodiment of the invention the secondary drive transmission means comprises a first secondary transmission means. Preferably, the first secondary transmission means comprises a rotatably mounted first secondary drive shaft for transmitting drive to the electrical power generating means, and a first secondary driven element fast thereon. Advantageously, the first secondary driven element is adapted for receiving drive from the flywheel. Preferably, the first secondary driven element is co-operable with a first secondary transmission element for receiving drive from the flywheel. Advantageously, the first secondary transmission element is rigidly coupled to the flywheel and coaxial therewith.

In one embodiment of the invention the first secondary driven element comprises a first secondary driven gear and the first secondary transmission element comprises a first secondary transmission gear. Alternatively, the first secondary driven element comprises a first secondary driven pulley wheel, the first secondary transmission element comprises a first secondary transmission pulley wheel, and a first secondary transmission belt transmits drive from the first secondary transmission pulley wheel to the first secondary driven pulley wheel.

In one embodiment of the invention the first secondary transmission element comprises the first primary driven element.

Advantageously, the first secondary drive shaft is rotatably mounted in the carrier means.

In one embodiment of the invention the electrical power generating means comprises a first electrical power generator, the first electrical power generator being driven by the first secondary drive transmission means. Preferably, the first secondary drive shaft drives the first electrical power generator. Advantageously, the first secondary drive shaft forms the drive shaft of the first electrical power generator.

Preferably, the first secondary transmission means is located within the drum.

In one embodiment of the invention the primary drive transmission means comprises a second primary transmission means adapted to transmit drive from the drum to the flywheel in one rotational direction only. In another embodiment of the invention the second primary transmission means is adapted to transmit drive from the drum to the flywheel when the drum is rotating in a rotational direction opposite to the rotational direction of the drum during which drive is transmitted from the drum to the flywheel by the first primary transmission means. Preferably, the second primary transmission means comprises a second one-way drive transmission means adapted to transmit drive therethrough in one rotational direction only. Advantageously, the second primary transmission means comprises a second primary gear train, and the second one-way drive transmission means is located in the second primary gear train.

In one embodiment of the invention the second primary transmission means comprises a second primary pinion rigidly carried on a rotatable second primary drive shaft, the second primary pinion being engageable with a second primary drive gear coupled to the drum. Advantageously, the second primary drive gear is coaxial with the main rotational axis. Preferably, the second primary drive gear is rigidly coupled to the drum. Advantageously, the second primary drive gear comprises one of an internally toothed gear and an externally toothed gear.

In one embodiment of the invention the second primary transmission means comprises a second primary driven element coupled to the flywheel and coaxial therewith. Preferably, the second primary driven element is rigidly coupled to the flywheel.

Preferably, the second primary transmission means comprises a second primary transmission element adapted to transmit drive from the second primary drive shaft to the second primary driven element. Advantageously, the second primary transmission element co-operates with the second primary driven element for transmitting drive from the second primary drive shaft to the second primary driven element. Ideally, the second primary drive shaft is co-operable with the second primary transmission element for transmitting drive from the second primary drive shaft to the second primary transmission element. Preferably, the second one-way drive transmission means is carried on the second primary drive shaft, and the second primary transmission element is driven by the second primary drive shaft through the second one-way drive transmission means.

In one embodiment of the invention the second primary transmission element comprises a second primary transmission gear, and the second primary driven element comprises a second primary driven gear. Alternatively, the second primary transmission element comprises a second primary transmission pulley wheel, the second primary driven element comprises a second primary driven pulley wheel, and a second primary transmission belt transmits drive from the second primary transmission pulley wheel to the second primary driven pulley wheel.

Preferably, the second primary drive shaft is rotatably mounted in the carrier means.

Advantageously, the second primary drive gear comprises an internally toothed gear. Preferably, the second one-way drive transmission means comprises a second cam clutch element.

Preferably, the second primary transmission means is located within the drum.

Advantageously, the first primary drive gear comprises an externally toothed gear.

In one embodiment of the invention the electrical power generating means comprises a second electrical power generator, and the secondary drive transmission means comprises a second secondary transmission means for transmitting drive from the flywheel to the second electrical power generator. Preferably, the second secondary transmission means comprises a rotatably mounted second secondary drive shaft for transmitting drive to the second electrical power generator, and a second secondary driven element fast thereon. Advantageously, the second secondary driven element is adapted for receiving drive from the flywheel. Ideally, the second secondary driven element is co-operable with a second secondary transmission element for receiving drive from the flywheel.

In one embodiment of the invention the second secondary transmission element is rigidly coupled to the flywheel and coaxial therewith.

In another embodiment of the invention the second secondary driven element comprises a second secondary driven gear and the second secondary transmission element comprises a second secondary transmission gear. Alternatively, the second secondary driven element comprises a second secondary driven pulley wheel, the second secondary transmission element comprises a second secondary transmission pulley wheel, and a second secondary transmission belt transmits drive from the second secondary transmission pulley wheel to the second secondary driven pulley wheel.

In another embodiment of the invention the second secondary transmission element comprises the second primary driven element.

Preferably, the second secondary drive shaft is rotatably mounted in the carrier means. In another embodiment of the invention the second secondary drive shaft drives the second electrical power generator. Preferably, the second secondary drive shaft forms the drive shaft of the second electrical power generator.

Advantageously, the second secondary transmission means is located within the drum.

Preferably, the electrical power generating means is located within the drum.

Ideally, the drum is a sealed drum. Preferably, the drum is sealably rotatable on the main shaft.

In one embodiment of the invention a conversion means is co-operable with the drum for converting motion of water into the one of the oscillating and rotational motion of the drum. Preferably, the conversion means is adapted for converting one of wave motion and tidal motion of water to the one of the oscillating and rotational motion of the drum.

In one embodiment of the invention the conversion means comprises at least one flap pivotally carried on the exterior of the drum. Preferably, each flap is pivotal about a corresponding pivot axis extending parallel to the main rotational axis of the drum. Advantageously, each flap is pivotal between an active state engageable with water moving adjacent the drum for inducing the one of the oscillating and rotational motion in the drum and an inactive state in which water moving adjacent the drum has minimal effect on the drum. Preferably, each flap is pivotal outwardly of the drum into the active state and is pivotal into abutting engagement with the drum in the inactive state. Advantageously, the flaps are located on the drum at circumferentially spaced apart intervals around the drum.

In another embodiment of the invention the conversion means comprises at least one hydrofoil vein adapted to rotate about a rotational axis, the at least one hydrofoil vein being operably coupled to the drum for inducing the one of the oscillating and rotational motion in the drum. Preferably, at least two hydrofoil veins are provided equi-spaced around the rotational axis of the hydrofoil veins.

In one embodiment of the invention the hydrofoil veins are configured for converting movement of water in a generally axial direction relative to the rotational axis of the hydrofoil veins to the one of the oscillating and rotational motion of the drum. Preferably, each hydrofoil vein extends radially from the rotational axis of the hydrofoil veins.

In another embodiment of the invention the hydrofoil veins are configured for converting movement of water in a general radial direction relative to the rotational axis of the hydrofoil veins to the one of the oscillating and rotational motion of the drum. Preferably, each hydrofoil vein extends substantially parallel to the rotational axis of the hydrofoil veins.

In another embodiment of the invention the rotational axis about which the hydrofoil veins are rotatable coincides with the main rotational axis of the drum.

In another embodiment of the invention each hydrofoil vein extends radially relative to the drum. Preferably, each hydrofoil vein extends radially from the drum.

In another embodiment of the invention each hydrofoil vein extends substantially parallel to the rotational axis of the drum. Preferably, each hydrofoil vein is spaced apart radially from the drum. Advantageously, the hydrofoil veins are coupled to the drum by a coupling member.

In one embodiment of the invention the conversion means is adapted for converting tidal motion of water to the one of the oscillating and rotational motion of the drum.

In another embodiment of the invention the conversion means is adapted for converting tidal motion of water to the rotational motion of the drum.

In a further embodiment of the invention the conversion means is adapted for converting wave motion of water into the one of the oscillating and rotational motion of the drum.

In a still further embodiment of the invention the conversion means is adapted for converting wave motion of water to the oscillating motion of the drum.

In another embodiment of the invention the conversion means is adapted for converting wave motion of water to the rotational motion of the drum.

In another embodiment of the invention the conversion means comprises a wave engaging element co-operating with the drum, the wave engaging element being responsive to wave motion for inducing the one of the oscillating and rotational motion of the drum.

In one embodiment of the invention the wave engaging element is carried externally of the drum and is rigidly coupled thereto for inducing the oscillating motion in the drum in response to wave motion. Preferably, the wave engaging element is located radially spaced apart from the drum. Advantageously, the wave engaging element is carried on a first carrier arm extending from and rigidly coupled to the drum. Preferably, the first carrier arm extends substantially radially from the drum relative to the main rotational axis thereof. Advantageously, the wave engaging element is located relative to the support structure to face into oncoming waves.

Preferably, the wave engaging element is adapted to float on the water. Advantageously, the wave engaging element comprises a wave engaging float.

In one embodiment of the invention the main shaft is non-rotatably supported on a support structure. Preferably, the main shaft is keyed to the support structure.

In another embodiment of the invention the support structure is carried on a buoyant structure. Preferably, the buoyant structure is adapted to float. Advantageously, the buoyant structure is adapted to float with the drum supported in waves. Alternatively, the buoyant structure is adapted to float with the drum supported above waves, and preferably, the buoyant structure is adapted to float with the drum located above the waves and clear of the waves.

In another embodiment of the invention the buoyant structure is adapted to support the drum beneath the waves with the waves having minimal influence on the drum.

In one embodiment of the invention the buoyant structure is adapted for anchoring to a bed of a sea or a lake.

In another embodiment of the invention the support structure is carried on one of a semi-submersible structure and a submersible structure.

In a further embodiment of the invention the one of the semi-submersible structure and the submersible structure is adapted for carrying the support structure with the drum located in waves. Alternatively, the one of the semi-submersible structure and the submersible structure is adapted for carrying the support structure with the drum submersed beneath waves.

Preferably, the one of the semi-submersible structure and the submersible structure is adapted to be anchored to a bed of a sea or a lake.

Advantageously, the one of the semi-submersible structure and the submersible structure comprises a buoyant element.

In another embodiment of the invention the support structure is coupled to the one of the semi-submersible structure and the submersible structure by a coupling means adapted to accommodate vertical movement between the support structure and the one of the semi-submersible structure and the submersible structure. Preferably, the coupling means comprises a linkage mechanism.

In another embodiment of the invention a stabilising means is provided for stabilising the drum in waves. Preferably, the stabilising means comprises a stabilising float carried on a second carrier arm rigidly mounted relative to the main shaft and extending substantially radially relative to the main shaft. Advantageously, the stabilising float is spaced apart radially from the drum. Ideally, the second carrier arm extends relative to the main shaft in a direction opposite to the direction from which the first carrier arm extends relative to the main arm.

In one embodiment of the invention the support structure is adapted for mounting the main shaft with the main rotational axis extending substantially horizontally.

In an alternative embodiment of the invention the support structure is adapted for mounting the main shaft with the main rotational axis extending substantially vertically.

The advantages of the invention are many. A particularly important advantage of the invention is the relative simplicity and efficiency with which energy is extracted from movement of water by the water powered electrical generator and converted into rotational drive in one direction for driving an electrical power generating means. The movement of water is converted into oscillating or rotational motion of the drum, and then the drive transmission means efficiently coverts the oscillating or rotational motion of the drum into drive in one direction for driving the electrical power generating means. The provision of the flywheel provides an important advantage in that it produces consistent drive for applying to the electrical power generating means. The provision of the first and second primary drive transmission means efficiently transmits drive to the flywheel from the drum during rotation of the drum in both rotational directions during oscillating motion of the drum. The provision of the first and second one-way drive transmission means in the first and second primary drive transmission means ensures that drive is applied to the flywheel in one direction only.

When the water powered electrical generator is adapted for extracting energy from waves, in other words, is adapted to be a wave powered electrical generator, energy is particularly efficiently extracted from passing waves and converted by the electrical power generating means to electricity in an efficient manner. When the water powered electrical generator is adapted for extracting energy from tidal flow of water, in other words, when the water powered electrical generator is adapted as a tidal powered electrical generator, energy is also efficiently and effectively extracted from a tidal flow and converted by the electrical power generating means to electricity.

In embodiments of the invention where the water powered electrical generator is a wave powered electrical generator and is provided with a conversion means in the form of a wave engaging element in the form of a wave engaging float, the provision of the wave engaging float provides a particularly important advantage in that the action of the waves on the wave engaging float results in the wave energy being translated into oscillating motion of the drum. A particularly important advantage of providing the wave engaging element as a wave engaging float is that the only part of the wave powered electrical generator which need make contact with the oncoming waves is the wave engaging float, thus the remainder of the wave powered electrical generator, and in particular the drum may be located submersed well beneath the waves or mounted on a floatable structure with the drum well above the waves, and thus, with the drum either submersed well below the waves or located well above the waves, the passing waves have little or no effect on the drum and the contents thereof.

In the embodiments of the invention where the converting means is provided by a plurality of flaps adapted to engage waves, the energy in the oncoming waves is extracted by the wave engaging flaps, which results in rotational motion of the drum.

A further advantage of the invention is that the drive transmission means as well as the electrical power generating means are located in the drum which is made watertight.

A further advantage of the invention is achieved when the converting means is adapted for converting tidal flow and/or ebb into rotational motion of the drum, in other words, when the water powered electrical generator is adapted as a tidal power electrical generator. By converting tidal flow and/or ebb of water into rotational motion of the drum and then transmitting the rotational motion of the drum to the electrical power generating means, a water powered electrical generator which efficiently and effectively converts tidal flow of water into electricity is provided.

The invention will be more clearly understood from the following description of some preferred embodiments thereof, which are given by way of example only, with reference to the accompanying drawings, in which:
Fig. 1 is a perspective view of a water powered electrical generator according to the invention,
Fig. 2 is another perspective view of the water powered electrical generator of Fig. 1.
Fig. 3 is another perspective view of the water powered electrical generator of Fig. 1 with a portion thereof removed,
Fig. 4 is a cross-sectional end elevational view of a portion of the water powered electrical generator of Fig. 1,
Fig. 5 is a partly schematic perspective view of a detail of the water powered electrical generator of Fig. 1,
Fig. 6 is another schematic perspective view of a portion of the detail of Fig. 5 of the water powered electrical generator of Fig. 1,
Fig. 7 is a schematic end elevational view of the detail of Fig. 6 of the water powered electrical generator of Fig. 1,
Fig. 8 is a side elevational view of the water powered electrical generator of Fig. 1 in use,
Fig. 9 is a view similar to Fig. 8 illustrating the water powered electrical generator of Fig. 1 in a different mode of use to that of Fig. 8,
Fig. 10 is a perspective view of a water powered electrical generator according to another embodiment of the invention,
Fig. 11 is a schematic perspective view of a portion of the water powered electrical generator of Fig. 10,
Fig. 12 is a schematic perspective view of a detail of the portion of Fig. 11 of the water powered electrical generator of Fig. 10,
Fig. 13 is a schematic end elevational view of the detail of Fig. 12 of the water powered electrical generator of Fig. 10,
Fig. 14 is a cross-sectional end elevational view of a portion of a water powered electrical generator according to another embodiment of the invention,
Fig. 15 is a partly cross-sectional side elevational view of the portion of the water powered electrical generator of Fig. 14,
Fig. 16 is a side elevational view of a water powered electrical generator according to another embodiment of the invention,
Fig. 17 is a cross-sectional end elevational view of the water powered electrical generator of Fig. 16,
Fig. 18 is a side elevational view of a portion of a water powered electrical generator according to a further embodiment of the invention, and
Fig. 19 is a perspective view of a portion of a water powered electrical generator according to a further embodiment of the invention.

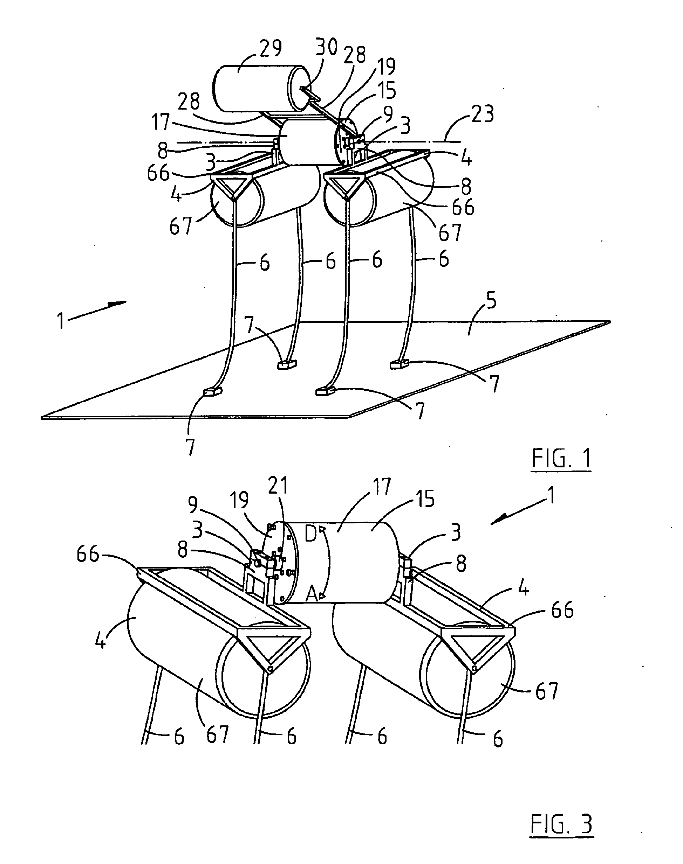

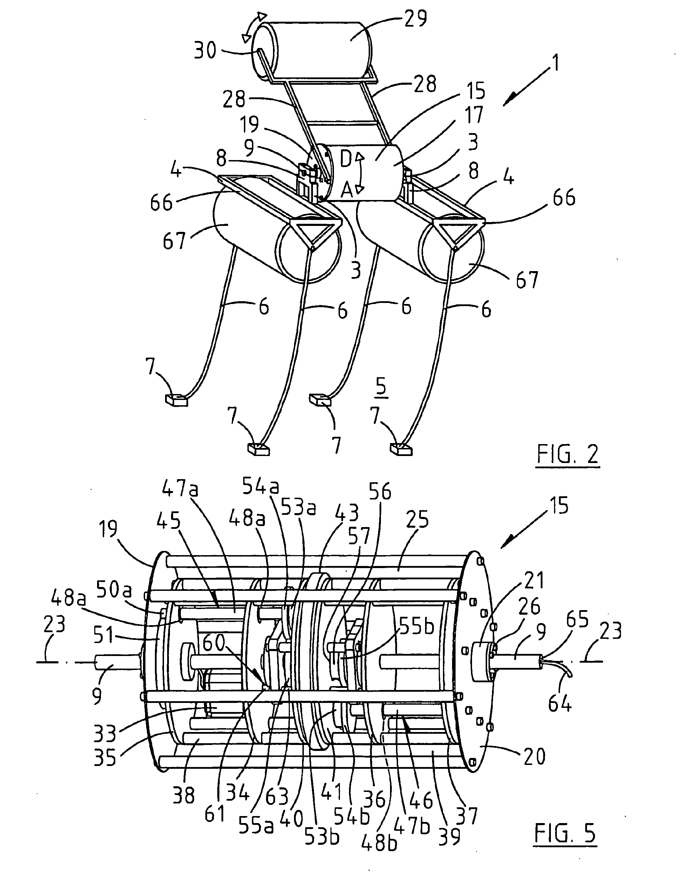

Referring to the drawings, and initially to Figs. 1 to 9 thereof, there is illustrated a water powered electrical generator according to one embodiment of the invention for converting movement of water into electrical power, and which in this embodiment of the invention is provided as a wave powered electrical generator, indicated generally by the reference numeral 1, for converting wave energy into electrical power. The wave powered electrical generator 1 comprises a support structure 3 which is mounted on a buoyant structure 4, which is adapted to float. The buoyant structure 4, in use, is adapted to be anchored to a bed 5 of a sea or a lake on which the wave powered electrical generator 1 is located. Four anchor lines 6 extend downwardly from the buoyant structure 4 to the seabed 5 for anchoring the wave powered electrical generator 1 to the seabed 5. The anchor lines 6 are secured to to anchor elements 7 embedded in the bed 5 of the sea or lake. The anchor lines 6 are adapted to accommodate vertical rising and falling of the buoyant structure 4 resulting from tidal flow and ebb of the sea. The buoyant structure 4 is described in more detail below.

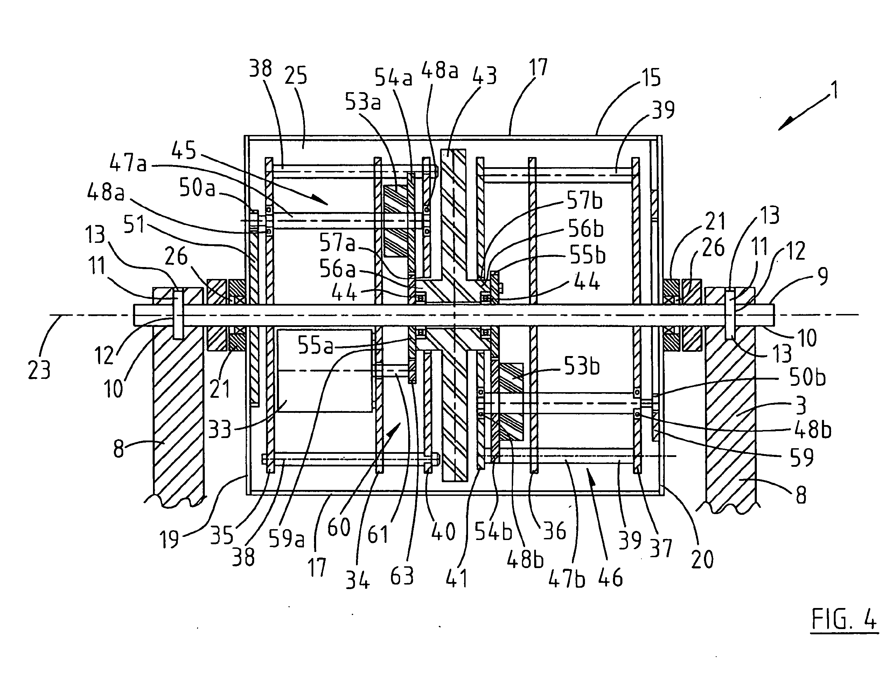

The support structure 3 comprises a pair of upstanding support brackets 8 extending upwardly from the buoyant structure 4 which rigidly carry a non-rotatable main shaft 9 which is keyed in respective bores 10 extending through the support brackets 8 by keying pins 11 which engage keying bores 12 and 13 in the main shaft 9 and in the support brackets 8, respectively, see in particular Fig. 4. A drum 15 comprising a cylindrical wall 17 and a pair of spaced apart opposite end walls 19 and 20 is rotatably carried on the main shaft 9 on bearings 21, so that the drum 15 is rotatable about a main rotational axis 23 which is defined by the main shaft 9. The drum 15 is configured to oscillate about the main rotational axis 23 in response to wave motion as will be described below. The cylindrical wall 17 and the end walls 19 and 20 define a hollow interior region 25, which is sealed and watertight by bearing seals 26 located in the bearings 21.

A converting means for converting movement of water, namely, wave motion into oscillating motion of the drum 15, in this embodiment of the invention comprises a pair of spaced apart first carrier arms 28 extend radially outwardly from the drum 15 and rotatably carry a wave engaging means, namely, a wave engaging float 29 adjacent distal ends 30 thereof. The first carrier arms 28 are rigidly secured to the respective end walls 19 and 20 of the drum 15, and in use are adapted to face into oncoming waves so that as the wave engaging float 29 rises and falls in response to oncoming waves, oscillating motion is induced in the drum 15 about the main rotational axis 23.

An electrical power generating means, namely an electrical power generator 33 is located in the hollow interior region 25 of the drum 15, and is rigidly mounted on a carrier means, namely, a first support plate 34 of four support plates, namely, the first support plate 34, a second support plate 35, a third support plate 36 and a fourth support plate 37, which are spaced apart from each other and are rigidly secured to the main shaft 9. The four support plates 34 to 37 extend parallel to each other and parallel to the end walls 19 and 20 of the drum 15. Two first tie bars 38 extend between and secure the first and second support plates 34 and 35 parallel and spaced apart from each other, while two second tie bars 39 extend between the third and fourth support plates 36 and 37 and secure the third and fourth support plates 36 and 37 parallel and spaced apart from each other. The first and second tie bars 38 and 39 extend beyond the corresponding first and third support plates 34 and 36, respectively, and carry fifth and sixth support plates 40 and 41, respectively.

A drive transmission means for transmitting drive resulting from the oscillating motion of the drum 15 to the electrical generator 33 comprises a flywheel 43 which is located within the drum 15, and which is rotatably mounted on the main shaft 9 on bearings 44, and is driven in one rotational direction only irrespective of the direction of rotation of the drum 15 during an oscillating cycle of the oscillating motion of the drum 15. The drive transmission means also comprises a first primary transmission means, namely, a first primary transmission 45, and a second primary transmission means, namely, a second primary transmission 46 for transmitting drive from the drum 15 to the flywheel 43. The first and second primary transmissions 45 and 46 are located within the drum and are substantially similar to each other, and the first primary transmission 45 will first be described.

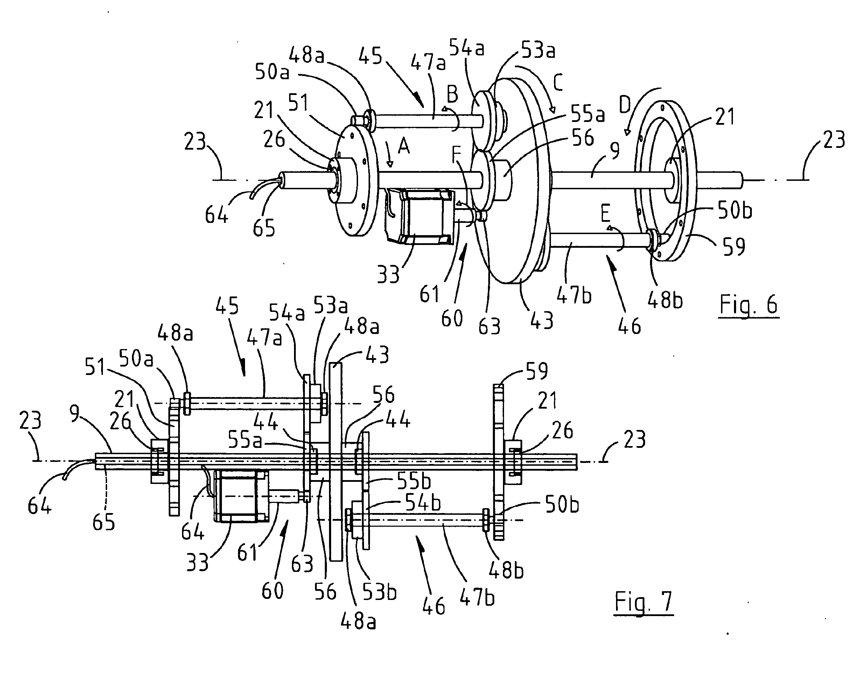

The first primary transmission 45 comprises a first primary drive shaft 47a which is rotatably carried in bearings 48a in the second and fifth support plates 35 and 40, respectively. A first primary pinion 50a is rigidly carried on the first primary drive shaft 47a and is engageable with a first primary drive gear 51 which is rigidly secured to the end wall 19 of the drum 15. In this embodiment of the invention the first primary drive gear 51 is an externally toothed gearwheel, so that when the drum 15 and in turn the first primary drive gear 51 are rotating in a clockwise direction, namely, in the direction of the arrow A of Fig. 6, the first primary drive shaft 47a is rotated in an anti-clockwise direction, namely, in the direction of the arrow B of Fig. 6.

A first one-way drive transmission means, namely, a first cam clutch element 53a is rigidly coupled to the first primary drive shaft 47a and carries a first primary transmission element, namely, a first primary transmission gear 54a to which drive is transmitted in one direction only, namely, in the direction of the arrow B through the first cam clutch element 53a. A first primary driven element, namely, a first primary driven gear 55a is rigidly coupled to the flywheel 43 through a boss 56a, and is rotatable therewith about the main rotational axis 23. The first primary driven gear 55a is engageable with the first primary transmission gear 54a for transmitting drive to the flywheel 43 from the first primary drive shaft 47a when the first primary drive shaft 47a is rotating in the direction of the arrow B, to in turn drive the flywheel 43 in a clockwise direction, namely, in the direction of the arrow C of Fig. 6. An opening 57a in the fifth support plate 40 accommodates the boss 56 of the flywheel therethrough to the first primary driven gear 55a.

As mentioned above, the second primary drive transmission 46 is substantially similar to the first primary drive transmission 45 and the components of the second primary transmission 46 which are similar to the corresponding components of the first primary drive transmission 45 are identified by the same reference numerals but designated with the reference letter b. However, in the second primary transmission 46 the second primary pinion 50b is engageable with a second primary drive gear 59 which is rigidly secured to the end wall 20 of the drum 15. The second primary drive gear 59 in this embodiment of the invention is an internally toothed gear, so that when the drum 15 is rotating in an anti-clockwise direction, namely, in the direction of the arrow D of Fig. 6, the second primary drive shaft 47b is rotated in an anti-clockwise direction in the direction of the arrow E, see Fig. 6. A second one-way drive transmission means, namely, a second cam clutch element 53b is rigidly coupled to the second primary drive shaft 47b, and is adapted to transmit drive to a second primary transmission gear 54b carried on the second cam clutch element 53b, only when the second primary drive shaft 47b is rotating in the direction of the arrow E, so that the second primary transmission gear 54b only transmits drive to a second primary driven gear 55b when the drum 15 and the second primary drive gear 59 are rotating in the direction of the arrow D only. The second primary driven gear 55b is rigidly coupled to the flywheel 43 through a boss 57b, and is coaxial with the flywheel 43, for driving the flywheel 43 in the clockwise direction, namely, in the direction of the arrow C only. An opening 57b in the sixth support plate 41 accommodates the boss 56b of the flywheel 43 to the second primary driven gear 55b.

Thus, drive is transmitted to the flywheel 43 by the first and second primary transmissions 45 and 46 during both directions of rotation of the drum 15 during the oscillating motion thereof. The first primary transmission 45 transmits drive from the drum 15 during rotation of the drum 15 in the clockwise direction, namely, in the direction of the arrow A, and the second primary transmission 46 transmits drive from the drum 15 during rotation of the drum 15 in the anti-clockwise direction, namely, in the direction of the arrow D.

The drive transmission means also comprises a first secondary transmission means, namely, a first secondary transmission 60 for transmitting drive from the flywheel 43 to the electrical generator 33 for driving the electrical generator 33. The first secondary transmission 60 is located within the drum 15 and comprises a first secondary drive shaft 61 which in this embodiment of the invention comprises the drive shaft 61 of the electrical generator 33. A first secondary pinion 63 is rigidly mounted on the drive shaft 61 of the generator 33 and is engageable with the first primary driven gear 55a so that drive is transmitted through the first primary driven gear 55a from the flywheel 43 to the drive shaft 61 of the electrical generator 33. Since the flywheel 43 is driven only in the clockwise direction, namely, in the direction of the arrow C, the drive shaft 61 of the generator is driven only in an anti-clockwise direction, namely, in the direction of the arrow F.

Electrical cables 64 from the electrical generator 33 are accommodated from the drum 15 through a coaxial bore 65 extending through the main shaft 9. The cables 64 are lowered to the seabed 5 on one or more of the anchor lines 6, and in turn to a land base station (not shown).

Returning now to the buoyant structure 4, the buoyant structure 4 comprises a pair of frameworks 66 which are respectively carried on floats 67. Although the frameworks 66 of the buoyant structure 4 are illustrated connected solely by the main shaft 9 through the support brackets 8, in practice, struts (not shown) will extend between the frameworks 66 for securing the frameworks 66 together. The anchor lines 6 are secured to the frameworks 66, two anchor lines 6 being secured to each framework 66 at respective opposite ends thereof.

In use, with the wave powered electrical generator 1 anchored to the seabed 5 by the anchor lines 6 and free to rise and fall vertically with the tidal ebb and flow, and with the wave engaging float 29 facing into the oncoming waves, and with the cables 64 from the wave powered electrical generator 1 fed to the land based station (not shown), the wave powered electrical generator 1 is ready for use. As the waves approach and pass the wave engaging float 29, the wave engaging float 29 rises and falls with the rise and fall of the waves.

The rising action of the wave engaging float 29 results in the drum 15 being rotated in a clockwise direction in the direction of the arrow A of Fig. 6. The clockwise rotation of the drum 15 in the direction of the arrow A in an oscillating cycle results in the first primary drive shaft 47a being rotated in an anti-clockwise direction in the direction of the arrow B, and in turn drive is transmitted from the first primary drive shaft 47a through the first cam clutch element 53a, the first primary drive transmission gear 54a and the first primary driven gear 55a to the flywheel 43 for rotating the flywheel 43 in a clockwise direction only, namely, in the direction of the arrow C of Fig. 6.

During the clockwise rotation of the drum 15 in the direction of the arrow A in an oscillating cycle, the second primary drive shaft 47b is also rotated in a clockwise direction. However, the second cam clutch element 53b prevents the transmission of drive from the second primary drive shaft 47b to the second primary transmission gear 54b. Thus, during the clockwise rotation of the drum 15 during an oscillating cycle of the drum 15, drive is transmitted from the clockwise rotation of the drum 15 to the flywheel 43 through the first primary transmission 45 only.

On the other hand, during the anti-clockwise rotation of the drum 15 in the direction of the arrow D during an oscillating cycle, resulting from the falling action of the wave engaging element 29, drive is transmitted from the anti-clockwise rotation of the drum 15 to the flywheel 43 through the second primary transmission 46. Since the second cam clutch element 53b transmits drive from the second primary drive shaft 47b to the flywheel 43 when the second primary drive shaft 47b is rotating in an anti-clockwise direction, namely, in the direction of the arrow E, the flywheel 43 is driven in the clockwise direction in the direction of the arrow C by the second primary transmission 46 when the drum 15 is rotating in the anti-clockwise direction in the direction of the arrow D. During anti-clockwise rotation of the drum 15 the first cam clutch element 53a prevents drive being transmitted from the first primary drive shaft 47a to the first primary transmission gear 54a since the first primary drive shaft 47a will be rotating in a clockwise direction. Thus, when the drum 15 is rotating in the anti-clockwise direction, namely, in the direction of the arrow D, the first cam clutch element 53a prevents drive being transmitted to the flywheel 43 through the first primary transmission.

Drive is transmitted from the flywheel 43 through the first secondary transmission 60, namely, through the first primary driven gear 55a and the first secondary pinion 63 to the drive shaft 61 of the generator 33 for operating the electrical generator 33 to produce electrical power. The electrical power is outputted through the cables 64 to the land based station (not shown).

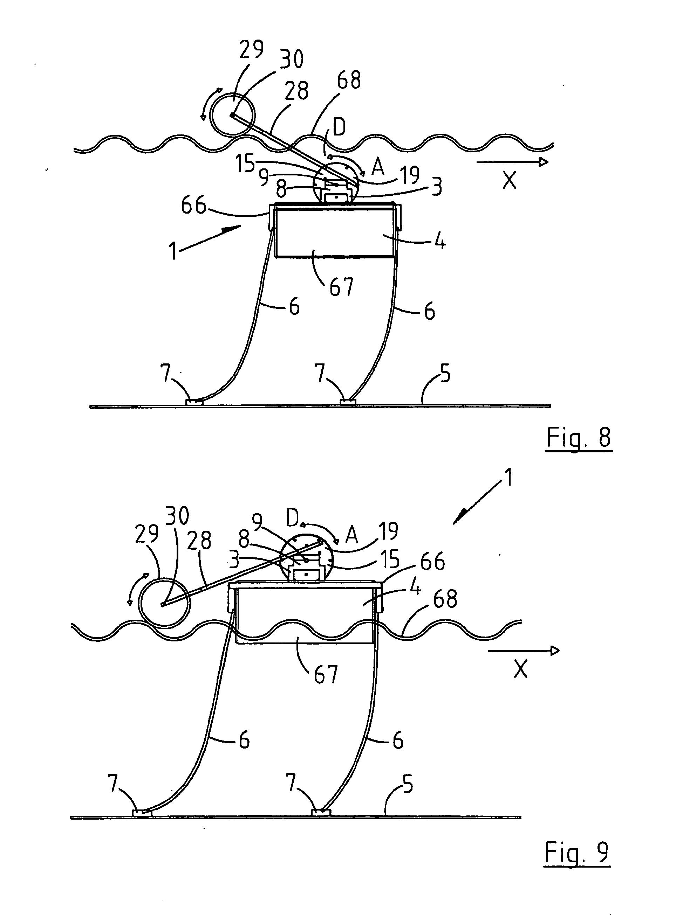

Referring now to Figs. 8 and 9, two modes of operation of the wave powered electrical generator 1 are illustrated. In the operating mode of Fig. 8 the buoyant structure 4 is anchored to the seabed by the anchor lines 6 to operate as a submersible structure with the support structure 3 and the drum 15 well below sea level, and in turn well below the effect of the passing waves 68, which pass in the direction of the arrow X, so that the passing waves 68 have little or no detrimental effect on the support structure 3 and the drum 15. However, the first carrier arms 28 extend in a generally upwardly forwardly direction into the oncoming waves 68, so that the wave engaging float 29 extends into the oncoming waves 68, and thus rises and falls in response to the passing waves 68 as they pass in the direction of the arrow X. The rising and falling action of the wave engaging float 29 induces the oscillating motion in the drum 15 in the direction of the arrows A and D, as already described.

In the operating mode of Fig. 9 the buoyant structure 4 is anchored to the seabed by the anchor line 6 to float on the passing waves 68 which pass in the direction of the arrow X. The buoyant structure 4 floats on the passing waves 68 with the drum 15 well above and clear of the passing waves 68, so that the passing waves 68 have little or no effect on the drum 15. In this mode of operation of the wave powered electrical generator 1 the first carrier arms 28 extend in a generally downwardly forwardly direction from the drum 15 into the oncoming waves 68 so that the wave engaging float 29 engages the oncoming waves 68 to rise and fall therewith, and in turn oscillate the drum 15 in the direction of the arrows A and D.

The rotational mounting of the wave engaging float 29 in the first carrier arms 28 permits the wave engaging float 29 to rotate or oscillate in response to the oncoming waves 68 engaging the wave engaging float 29, in order to minimise drag between the oncoming waves 68 and the wave engaging float 29.

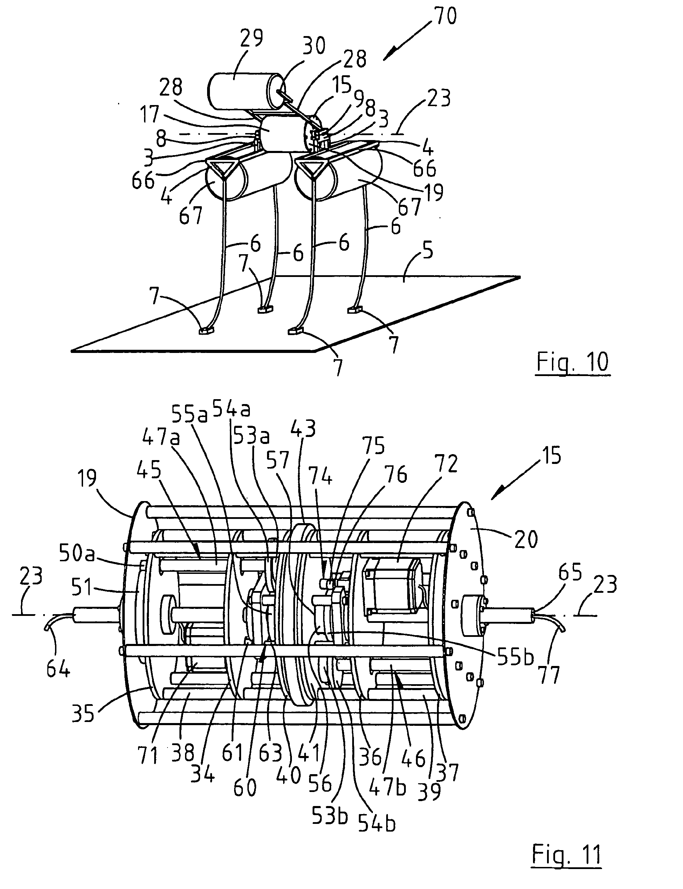

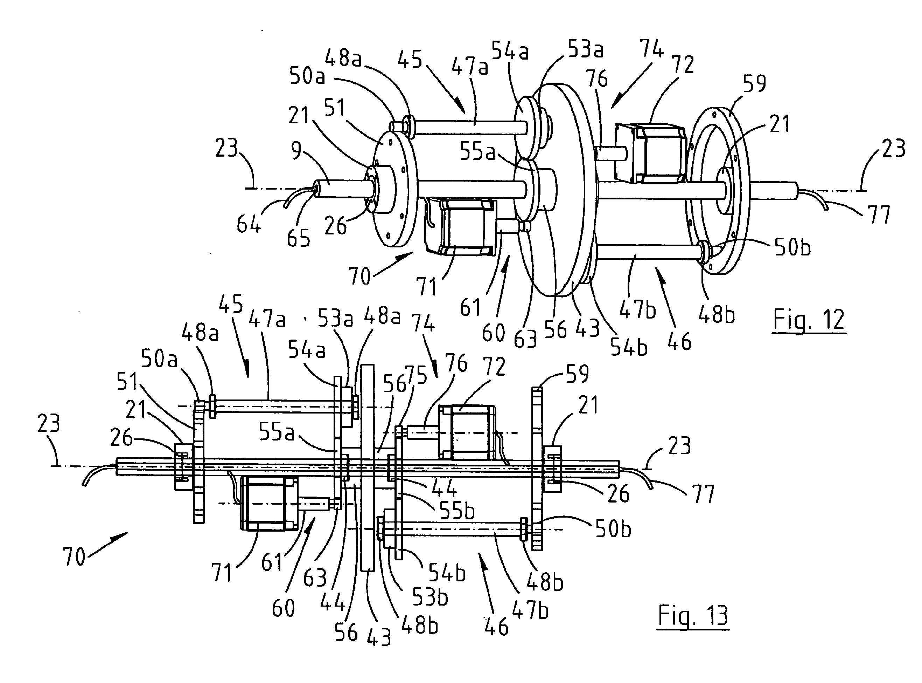

Referring now to Figs. 10 to 13, there is illustrated a water powered electrical generator according to another embodiment of the invention, which in this case is also a wave powered electrical generator, indicated generally by the reference numeral 70. The wave powered generator 70 is substantially similar to the wave powered generator 1 and similar components are identified by the same reference numerals. The main difference between the wave powered generator 70 and the wave powered generator 1 is that the electrical power generating means comprises a first electrical power generator 71 and a second electrical power generator 72. The first and second electrical power generators 71 and 72 are similar to the electrical power generator 33 of the wave powered electrical generator 1. In this embodiment of the invention the first electrical power generator 71 is rigidly secured to the first support plate 34 in a similar manner to that in which the electrical power generator 33 is secured to the first support plate 34 of the wave powered electrical generator 1. The second electrical power generator 72 is rigidly secured to the third support plate 36. The drive transmission means in this embodiment of the invention comprises a first secondary transmission 73, which is similar to the first secondary transmission 60, and a second secondary drive transmission means, namely, a second secondary transmission 74. The first secondary transmission 73 transmits drive from the flywheel 43 to the first electrical power generator 71, and the second secondary drive transmission 74 transmits drive from the flywheel 43 to the second generator 72. The second secondary transmission 74 comprises a second secondary pinion 75 rigidly carried on a second drive shaft 76 of the second generator 72. The second secondary pinion 75 is engageable with the second primary driven gear 55b for transmission of drive from the flywheel 43 to the second generator 72. Cables 77 from the second generator 72 are accommodated externally of the drum 15 through the bore 65 in the main shaft 9.

Otherwise, the wave powered generator 70 is similar to the wave powered generator 1, as is its use.

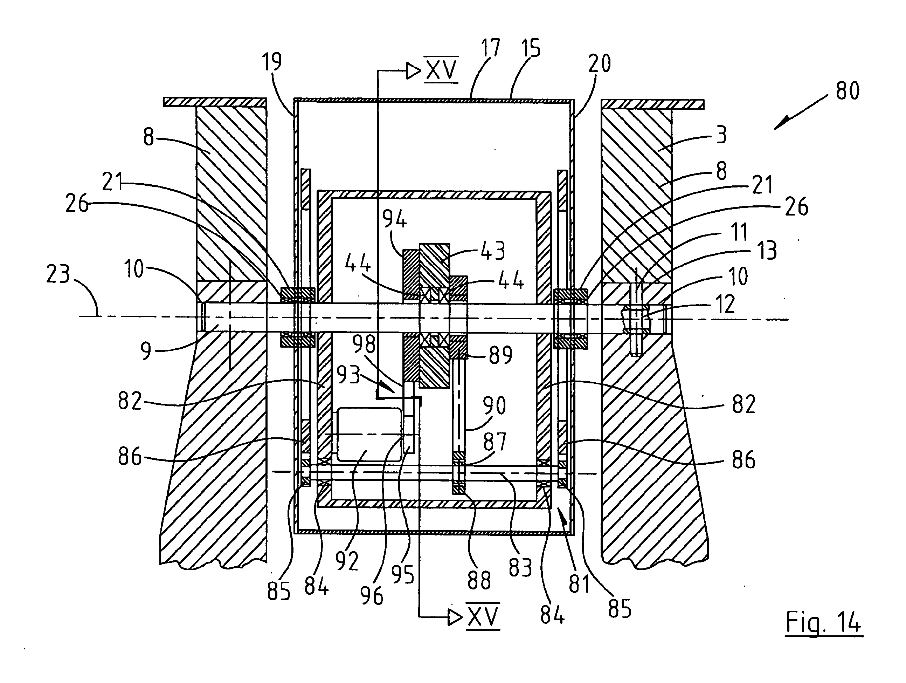

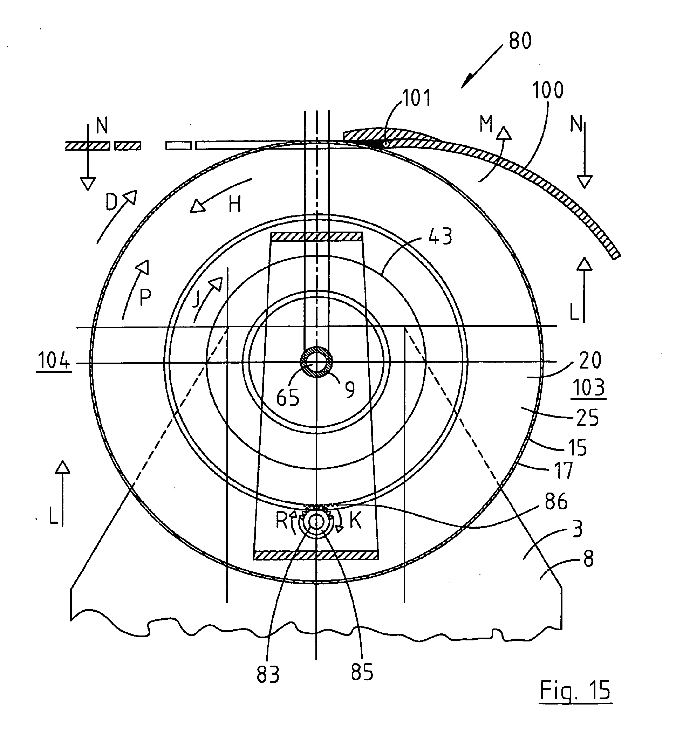

Referring now to Figs. 14 and 15, there is illustrated a water powered electrical generator according to another embodiment of the invention, which in this case is also a wave powered electrical generator, indicated generally by the reference numeral 80. The wave powered generator 80 is substantially similar to the wave powered generator 1, and similar components are identified by the same reference numerals. However, in this embodiment of the invention the drum 15 is adapted to rotate and not oscillate, and only a first primary transmission 81 is provided. The first primary transmission 81 transmits drive in one direction only from the drum 15 to the flywheel 43 while the drum 15 is rotating in one direction only, namely, during rotation of the drum 15 in an anti-clockwise direction, namely, in the direction of the arrow H of Fig. 15. Rotation of the drum 15 in the anti-clockwise direction of the arrow H rotates the flywheel 43 in a clockwise direction, namely, in the direction of the arrow J, see Fig. 15. During rotating of the drum 15 in the opposite clockwise direction, namely, in the direction of the arrow P, no drive is transmitted from the drum 15 to the flywheel 43.

In this embodiment of the invention the carrier means comprises a pair of support plates 82 which are rigidly secured to the main shaft 9. The primary transmission 81 comprises a primary drive shaft 83 which is rotatably carried in the support plates 81 in bearings 84. Primary drive pinions 85 rigidly carried on the primary drive shaft 83 are engageable with externally toothed gears 86 which are rigidly secured to the end walls 19 and 20 of the drum 15 and are coaxial therewith. A one-way drive transmission means, namely, a cam clutch element 87 rigidly carried on the primary drive shaft 83 in turn carries a primary transmission pulley wheel 88 which drives a primary driven pulley wheel 89 through a primary drive belt 90. The primary driven pulley wheel 89 is rigidly coupled to the flywheel 43 and coaxial therewith for driving the flywheel 43. In this embodiment of the invention the cam clutch element 87 is configured to transmit drive from the primary drive shaft 83 when the primary drive shaft 83 is rotating in a clockwise direction, namely, in the direction of the arrow K in response to rotation of the drum 15 in the anti-clockwise direction, namely, in the direction of the arrow H, see Fig. 15.

The drive transmission means in this embodiment of the invention also comprises a secondary drive transmission means, namely, a secondary drive transmission 93 for transmitting drive from the flywheel 43 to an electrical power generator 92, which is rigidly carried on the adjacent one of the support plates 81. The secondary drive transmission 93 comprises a secondary transmission pulley 94 rigidly coupled to the flywheel 43 and coaxial therewith to rotate with the flywheel 43, and a secondary driven pulley wheel 95 which is rigidly carried on a drive shaft 96 of the electrical power generator 92. A secondary drive transmission belt 98 transmits drive from the secondary transmission pulley 94 to the secondary driven pulley 95 for transmitting drive from the flywheel 43 to the electrical power generator 92.

In this embodiment of the invention the conversion means for converting movement of water, namely, wave motion into rotational motion of the drum 15 comprises a wave engaging means, namely, a plurality of flaps 100, only one of which is illustrated in Fig. 15, which are pivotally coupled to the drum 15 at circumferentially spaced apart intervals around the cylindrical wall 17 thereof for rotating the drum 15 in response to wave motion in the anti-clockwise direction. The flaps 100 are pivotally coupled to the cylindrical wall 17 of the drum 15 by pivot shafts 101 which define pivot axes about which the corresponding flaps 100 are pivotal, and which extend parallel to the main rotational axis 23. The flaps 100 are of arcuate cross-section, and extend substantially the width of the drum 15.

Upward wave motion in the direction of the arrow L urges on one side 103 of the drum 15 the flaps 100 outwardly in the direction of the arrow M into an active position, whereby the action of the waves on the flaps 100 in the direction of the arrow L rotates the drum 15 in the anti-clockwise direction of the arrow H. However, the action of the waves in the downward direction, namely, the direction of the arrow N, on the other side 104 of the drum 15 urges the flaps 100 outwardly into the active position, thereby also rotating the drum 15 in the anti-clockwise direction of the arrow H. The upward movement of the waves in the direction of the arrow L on the side 104 of the drum 15 has no driving effect on the drum 15. Similarly, the downward action of the waves in the direction of the arrow N on the side 103 of the drum 15 likewise has no driving effect on the drum 15.

Accordingly, the flaps 100 in response to wave motion rotate the drum 15 in the anti-clockwise direction of the arrow H only. However, in the event that the drum 15 is rotated in a clockwise direction, namely, in the direction of the arrow P, which would rotate the primary drive shaft 83 in an anti-clockwise direction, namely, in the direction of the arrow R, transmission of drive from the drum 15 to the flywheel 43 is prevented by the cam clutch element 87. Thus, irrespective of the rotation of the drum 15, the flywheel 43 is only driven during anti-clockwise rotation of the drum in the direction of the arrow H, and this, as discussed above, rotates the flywheel 43 in the direction of the arrow J.

Otherwise, the wave powered generator 8 is similar to the wave powered generator 1, as is its use.

While the wave powered generator 80 has been described as comprising only one single primary drive transmission means, it will be readily apparent to those skilled in the art that two primary drive transmission means may be provided, namely, a first primary drive transmission means and a second primary drive transmission means. In which case, the first primary drive transmission means could be driven by an externally toothed primary drive gear rigidly secured to one end wall of the drum to rotate with the drum, and the second primary drive transmission means could be driven by an internally toothed primary drive gear rigidly secured to the other end wall of the drum in a similar manner as the externally toothed and internally toothed primary drive gears are rigidly secured to the respective opposite end walls of the drum of the generator 9.

Needless to say, a pair of electrical power generators could be provided in the drum of the wave powered generator 80 and would be driven by respective secondary drive transmission means, which could be belt drive transmission means or gear drive transmission means.

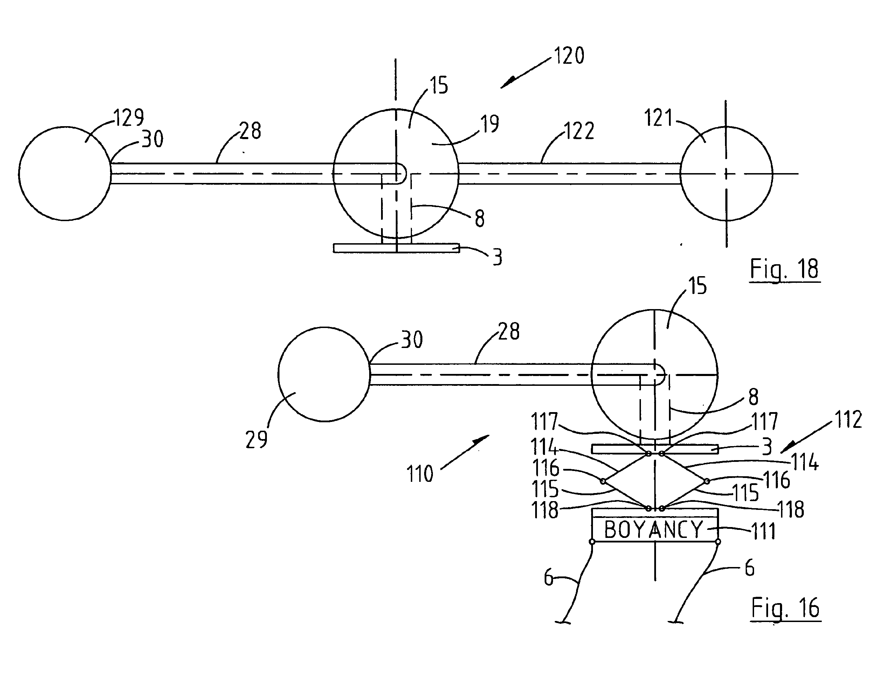

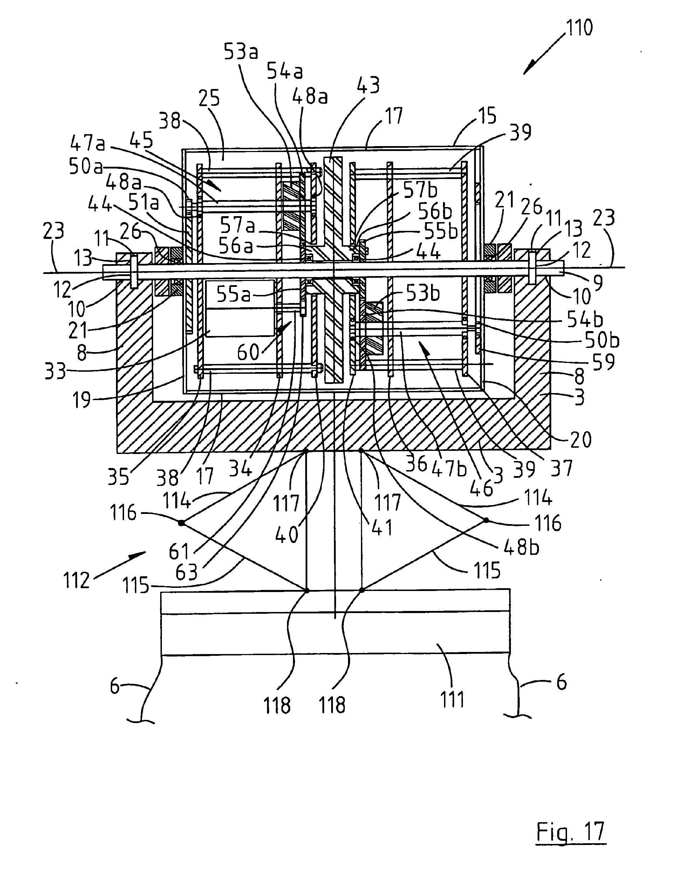

Referring now to Figs. 16 and 17, there is illustrated a water powered electrical generator according to another embodiment of the invention, which is also a wave powered electrical generator, indicated generally by the reference numeral 110. The wave powered generator 110 is substantially similar to the wave powered generator 1 and similar components are identified by the same reference numerals. The only difference between the wave powered generator 110 and the wave powered generator 1 is in the mounting of the support structure 3. In this embodiment of the invention the support structure 3 is coupled to a buoyant submersible structure 111 by a linkage mechanism 112 to facilitate vertical movement of the support structure 3 and the drum 15 in response to tidal flow and ebb. Buoyancy elements (not shown) are secured to the support structure 3 in order to maintain the support structure 3 floating with the drum 15 above the water level. Anchor lines 6 anchor the submersible structure 111 to the seabed (not shown).

The linkage mechanism 112 comprises a pair of upper links 114 and a pair of lower links 115. The upper and lower links 114 and 115 are pivotally coupled in pairs to each other by pivot joints 116, while the upper links 114 are pivotally coupled to the support structure 3 by upper pivot joints 117 and the lower links 115 are pivotally coupled to the submersible structure 111 by lower pivot joints 118. Pivoting of the upper and lower links 114 and 115 about the pivot joints 116, 117 and 118 accommodates upward and downward vertical movement of the support structure 3, and in turn the drum 15 upward and downwardly relative to the submersible structure 111.

Otherwise, the wave powered generator 110 is similar to the wave powered generator 1, and its use is likewise similar.

Referring now to Fig. 18, there is illustrated a wave powered generator 120 according to a further embodiment of the invention, indicated generally by the reference numeral 120. The wave powered generator 120 is substantially similar to the wave powered generator 1 which is described with reference to Figs. 1 to 9, and similar components are identified by the same reference numerals. The only difference between the wave powered generator 120 and the wave powered generator 1 is that the wave powered generator 120 comprises a stabilising float 121 carried on a pair of second carrier arms 122 extending radially relative to the main rotational axis 23. The second carrier arms 122 are secured to the support brackets 8 of the support structure 3. The stabilising float 121 is provided for stabilising the support structure 3 and in turn the drum 15 in the water. In use the stabilising float 121 is adapted to be located on the downward side of the support structure 3, and in turn the drum 15 to engage the waves which have passed the drum 15.

Otherwise, the wave powered generator 120 and its use is similar to that of the wave powered generator 1.

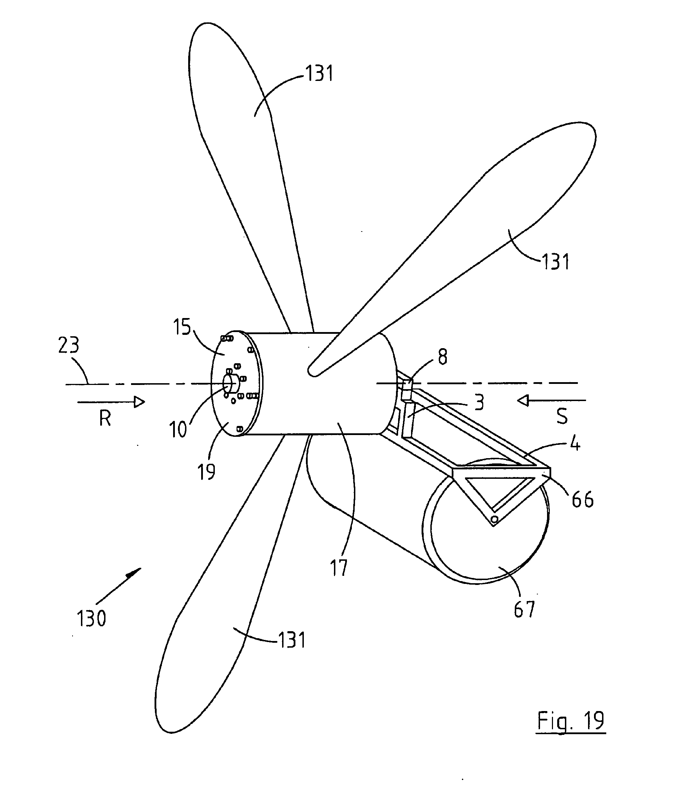

Referring now to Fig. 19, there is illustrated a portion of a water powered electrical generator according to a still further embodiment of the invention for converting movement of water into electrical power. In this embodiment of the invention the water powered electrical generator is adapted as a tidal powered electrical generator, indicated generally by the reference numeral 130, for converting tidal flow and ebb in seawater, or in a river estuary, or indeed, for converting flow of water in a river into electrical power. The tidal powered electrical generator 130 is substantially similar to the wave powered generator 1, and similar components are identified by the same reference numerals. In this embodiment of the invention the main shaft 9 is supported on a single support structure 3 and is keyed to the support structure 3, and extends in a cantilevered form therefrom. The support structure 3 is supported on one of the buoyant structures 4 which is anchored to the seabed by anchor lines, not shown, so that the buoyant structure 4 is completely submersed in the water well below the surface of the water. The anchor lines 6 anchor the buoyant structure 4 so that the main shaft 9 extends from the support structure 3 with the main rotational axis 23 defined by the main shaft 9 extending substantially horizontally and parallel to the tidal flow in the directions of the arrows R and S.

Three hydrofoil vanes 131 are rigidly secured to the cylindrical wall 17 of the drum 15, and extend radially from the drum 15 and are equi-spaced apart circumferentially around the drum 15 at 120° intervals. The hydrofoil vanes 131 are responsive to tidal flow in the direction of the arrows M and N for rotating the drum 15. The hydrofoil vanes 131 may be of the featherable type so that irrespective of the direction of tidal flow and ebb in the direction of the arrows R or S, the hydrofoil vanes 131 could be feathered in order to rotate the drum in one direction only, or they may be of the unfeathered type, which would result in the drum 15 being rotated in one direction when the tidal flow or ebb is in the direction of the arrow R, and in the reverse direction when the tidal flow or ebb is in the direction of the arrow S. However, irrespective of the direction of rotation of the drum 15 by the hydrofoil vanes 131, the first and second primary transmissions, which are similar to the first and second primary transmissions 45 and 46 of the wave powered electrical generator 1, drive the flywheel of the tidal power generator 130, which is similar to the flywheel 43 of the wave powered electrical generator 1 in one direction only, which in turn drives the electrical power generator, which is similar to the electrical power generator 33 of the wave powered electrical generator 1 in the one direction only for generating electrical power.

The length of the hydrofoil vanes 131 are selected, as is the depth to which the buoyant structure 4 is submersed by the anchor lines 6 so that the drum 15 is located in the water at a depth that for all tidal levels of the water from high tide to low tide, the hydrofoil vanes 15 are located within the water, and are clear of the seabed, although it is envisaged that a control means may be provided to vary the depth below the surface of the water at which the buoyant structure supports the drum 15 as the tide rises and falls.

In use, with the tidal powered electrical generator 130 anchored to the seabed, tidal flow in the direction of the arrow R acting on the hydrofoil vanes 131 cause the hydrofoil vanes 131 to rotate the drum 15, and similarly, tidal ebb in the direction of the arrow S likewise acting on the hydrofoil vanes 131 also rotate the drum 15. The rotation of the drum 15 will depend on whether the hydrofoil vanes are featherable of otherwise. If the hydrofoil vanes are featherable, the vanes can be feathered between changes in tidal flow and ebb, so that the drum 15 is rotated in the one direction only, irrespective of the directions of tidal flow and ebb, on the other hand, if the hydrofoil vanes 131 are not featherable, the drum 15 will be rotated in one direction by the hydrofoil vanes 15 when the tidal flow or ebb is in the direction of the arrow R, and in the reverse direction when the tidal flow or ebb is in the direction of the arrow S.

While the support means for supporting the main shaft 9 has been described as comprising a single support bracket 8 and a single buoyant structure 4, in practice, it is envisaged that the buoyant structure may comprise a number of floats 67 with corresponding frameworks 66 which would be coupled together, which would ensure that the main shaft 9 was retained substantially horizontally with the main rotational axis 23 also extending substantially horizontally parallel to the direction of tidal flow and ebb. It is also envisaged that the support means, instead of being provided by a buoyant support or a semi-submersible or submersible structure, may be provided by a support structure which would be rigidly anchored to the seabed, for example, by pylons or the like.

While the tidal powered electrical generator 130 has been described as comprising converting means for converting movement of water into rotational energy of the drum 15 being provided in the form of hydrofoil vanes, any other suitable converting means for converting tidal flow of water to rotational or oscillating motion of the drum 15 may be provided. In the tidal powered electrical generator 130, the hydrofoil vanes are configured to be responsive to axial flow of the tidal flow and ebb relative to the rotational axis about which the hydrofoil vanes rotate, namely, the main rotational axis 23. However, it is envisaged that the hydrofoil vanes may be configured to receive the tidal flow radially, rather than axially, and in which case, it is envisaged that the hydrofoil vanes would be equi-spaced apart around the drum 15 and radially spaced apart therefrom and would extend parallel to the main rotational axis 23. Needless to say, any other suitable converting means or any other suitable configuration of hydrofoil vanes may be used.

While the tidal powered electrical generator 130 has been described as being substantially similar to the wave powered electrical generator 1, it is envisaged that the drum 15 and the contents therein may be similar to the drums of any of the water powered electrical generators described with reference to the other embodiments of the invention.

It is also envisaged that the wave powered generator 80 which has been described with reference to Figs. 14 and 15 may be adapted for converting tidal flow and ebb into electrical energy, and in which case, the wave powered electrical generator 80 would be adapted as a tidal powered electrical generator. When adapted as a tidal powered electrical generator, the generator 80 would be completely submersed in the water within the tidal flow with the main shaft 9 and the main rotational axis 23 extending transversely of the tidal flow. When adapted as a tidal powered electrical generator, the generator 80 could be supported on the support structure with the main shaft 9 and the main rotational axis 23 extending either substantially horizontally or substantially vertically. Indeed, when adapted as a tidal powered electrical generator, the main shaft 9 and the main rotational axis 23 of the wave powered electrical generator 80 once they are extending transversely of tidal flow, the angle with which the main shaft 9 and the main rotational axis 23 make with the horizontal or vertical is not particularly important.

While the electrical power generated by the generators of the water powered electrical generators has been described as being outputted directly through cables to a shore based power station, it is envisaged in certain cases that electrical storage batteries may be provided in the hollow interior region 19 of the drums which would be charged by the generator and electricity from the batteries would then be transmitted through cables to the shore based power station.

While specific primary and secondary drive transmission means have been described for transmitting drive from the drum to the flywheel, and in turn from the flywheel to the electrical power generator or generators, any other suitable drive means may be provided. Indeed, in certain cases, it is envisaged that the respective primary and secondary drive means may transmit drive through a series of gear trains from the drum to the flywheel, and in turn from the flywheel to the electrical power generator or generators.

While the water powered electrical generators have been described as comprising specific constructions of support structures 3 and buoyant structures 4, any other suitable construction of support and buoyant structures may be provided. Needless to say, while the wave powered electrical generator 110 has been described as being supported on a submersible structure 111, it is envisaged that the wave powered electrical generator 110 as well as the other wave or tidal powered electrical generators could be supported on a semi-submersible structure.

It is also envisaged that while the drum has been described as being of cylindrical construction, any other suitable construction and shape of drum may be used. While the electrical power generators which are located within the drum 15 of the water powered electrical generators have been described as being mounted on support plates, it is envisaged in certain cases that the electrical power generator could be mounted on the main shaft and incorporated into the flywheel. For example, the stator of the electrical power generator would be mounted on the main shaft, and the rotor would be formed in or mounted on the flywheel. This configuration of construction of the electrical power generator with the flywheel would form a particularly convenient, efficient and compact construction of the water powered electrical generators, and would allow the drum 15 to be reduced in size.

It will also be appreciated that while the one-way drive transmission means have been described as comprising cam clutches, any other suitable one-way drive transmission means may be used. Indeed, it is envisaged that in certain cases the one-way drive transmission may be achieved through an electrically powered device.

While floats of specific shapes have been described, floats of any other suitable shape or construction may be provided. It is also envisaged that the cable or cables from the electrical power generators located within the drum may be accommodated from the drum by means other than accommodating the cable or cables through a bore in the main shaft.

## Claims

1. A water powered electrical generator comprising a drum (15) rotatably mounted on a non-rotatable main shaft (9) about a main rotational axis (23), and being configurable to one of oscillate and rotate about the main rotational axis (23) in response to motion of water, a carrier means (34,35,36,37) rigidly supported on the main shaft (9) within the drum (15) carrying an electrical power generating means (33,71,72,92), and a drive transmission means (43,45,46,60,74,81,93) operably coupling the drum (15) to the electrical power generating means (33,71,72,92) for transmitting drive from the drum (15) to the electrical power generating means (33,71,72,92) in response to the one of the oscillating and rotational motion of the drum (15) on the main shaft (9), **characterised in that** the drive transmission means (43,45,46,60,74,81,93) comprises a flywheel (43) rotatably mounted on the main shaft (9).

2. A water powered electrical generator as claimed in Claim 1 **characterised in that** the drive transmission means (43,45,46,60,74,81,93) is configured to drive the electrical power generating means (33,71,72,92) in one rotational direction only.

3. A water powered electrical generator as claimed in Claim 1 or 2 **characterised in that** the drive transmission means (43,45,46,60,74,81,93) is configured to drive the electrical power generating means (33,71,72,92) in the one rotational direction only in response to the one of the oscillating and rotational motion of the drum (15) in both rotational directions.

4. A water powered electrical generator as claimed in any preceding claim **characterised in that** the flywheel (43) is located within the drum (15).

5. A water powered electrical generator as claimed in any preceding claim **characterised in that** the drive transmission means (43,45,46,60,74,81,93) comprises a primary drive transmission means (45,46,81) for transmitting drive from the drum (15) to the flywheel (43).

6. A water powered electrical generator as claimed in Claim 5 **characterised in that** the primary drive transmission means (45,46,81) comprises a first primary transmission means (45,81), the first primary transmission means (45,81) comprising a first one-way drive transmission means (53a,87) adapted to transmit drive therethrough from the drum (15) to the flywheel (43) in the one rotational direction only.

7. A water powered electrical generator as claimed in Claim 5 or 6 **characterised in that** the primary drive transmission means (45,46,81) comprises a second primary transmission means (46), the second primary transmission means (46) comprising a second one-way drive transmission means (53b) adapted to transmit drive therethrough from the drum (15) to the flywheel (43) in the one rotational direction only when the drum (15) is rotating in a rotational direction opposite to the rotational direction of the drum (15) during which drive is transmitted from the drum (15) to the flywheel (43) by the first primary transmission means (45,81).

8. A water powered electrical generator as claimed in any preceding claim **characterised in that** the drive transmission means (43,45,46,60,74,81,93) comprises a secondary drive transmission means (60,74,93) for transmitting drive from the flywheel (43) to the electrical power generating means (33,71,72,92).

9. A water powered electrical generator as claimed in Claim 8 **characterised in that** the electrical power generating means (33,71,72,92) comprises a first electrical power generator (33,71,92), and the secondary drive transmission means (60,74,93) comprises a first secondary transmission means (60,93), the first electrical power generator (33,71,92) being driven by the first secondary drive transmission means (60,93).

10. A water powered electrical generator as claimed in Claim 8 or 9 **characterised in that** the electrical power generating means (33,71,72,92) comprises a second electrical power generator (72), and the secondary drive transmission means (60,74,93) comprises a second secondary transmission means (74) for transmitting drive from the flywheel (15) to the second electrical power generator (72).

11. A water powered electrical generator as claimed in any preceding claim **characterised in that** the drum (15) is sealably rotatable on the main shaft (9).

12. A water powered electrical generator as claimed in any preceding claim **characterised in that** a conversion means (28,29,100,131) is co-operable with the drum (15) for converting motion of water into the one of the oscillating and rotational motion of the drum (15).

13. A water powered electrical generator as claimed in Claim 12 **characterised in that** the conversion means (28,29,108,131) comprises one of at least one flap (100) pivotally carried on the exterior of the drum (15), at least one hydrofoil vein (131) adapted to rotate about a rotational axis, the at least one hydrofoil vein (131) being operably coupled to the drum (15) for inducing the one of the oscillating and rotational motion in the drum (15), and a wave engaging element (29) carried on a first carrier arm (28) extending from and rigidly coupled to the drum (15).

14. A water powered electrical generator as claimed in any preceding claim **characterised in that** the main shaft (9) is non-rotatably supported on a support structure (3,111), the support structure (3,111) being carried on one of a buoyant structure (4), a semi-submersible structure (111) and a submersible structure.

15. A water powered electrical generator as claimed in any preceding claim **characterised in that** a stabilising means (121,122) is provided for stabilising the drum (15) in waves.

## Patentansprüche

1. Wasserbetriebener elektrischer Generator, aufweisend einen Zylinder (15), der um eine Hauptdrehachse (23) drehbar an einer drehfesten Hauptwelle (9) angebracht ist und so ausbildbar ist, dass er in Reaktion auf eine Bewegung von Wasser entweder um die Hauptdrehachse (23) schwingt oder sich um diese dreht, eine Trägereinrichtung (34, 35, 36, 37), die starr auf der Hauptwelle (9) im Inneren des Zylinders (15) gelagert ist und eine Stromerzeugungseinrichtung (33, 71, 72, 92) trägt, und eine Antriebsübertragungseinrichtung (43, 45, 46, 60, 74, 81, 93), die den Zylinder (15) betriebsmäßig mit der Stromerzeugungseinrichtung (33, 71, 72, 92) verbindet, um, in Reaktion auf entweder die Schwingungsbewegung oder die Drehbewegung des Zylinders (15) auf der Hauptwelle (9), die Antriebskraft von dem Zylinder (15) auf die Stromerzeugungseinrichtung (33, 71, 72, 92) zu übertragen, **dadurch gekennzeichnet, dass** die Antriebsübertragungseinrichtung (43, 45, 46, 60, 74, 81, 93) eine drehbar auf der Hauptwelle (9) angebrachte Schwungscheibe (43) aufweist.

2. Wasserbetriebener elektrischer Generator nach Anspruch 1, **dadurch gekennzeichnet, dass** die Antriebsübertragungseinrichtung (43, 45, 46, 60, 74, 81, 93) die Stromerzeugungseinrichtung (33, 71, 72, 92) in nur eine Drehrichtung anzutreiben vermag.

3. Wasserbetriebener elektrischer Generator nach Anspruch 1 oder 2, **dadurch gekennzeichnet, dass** die Antriebsübertragungseinrichtung (43, 45, 46, 60, 74, 81, 93) die Stromerzeugungseinrichtung (33, 71, 72, 92) in die nur eine Drehrichtung anzutreiben vermag in Reaktion auf entweder die Schwingungsbewegung oder die Drehbewegung des Zylinders (15) in beide Drehrichtungen.

4. Wasserbetriebener elektrischer Generator nach einem der vorhergehenden Ansprüche, **dadurch gekennzeichnet, dass** die Schwungscheibe (43) im Inneren des Zylinders (15) angeordnet ist.

5. Wasserbetriebener elektrischer Generator nach einem der vorhergehenden Ansprüche, **dadurch gekennzeichnet, dass** die Antriebsübertragungseinrichtung (43, 45, 46, 60, 74, 81, 93) eine Primärantriebsübertragungseinrichtung (45, 46, 81) zum Übertragen von Antriebskraft von dem Zylinder (15) auf die Schwungscheibe (43) aufweist.

6. Wasserbetriebener elektrischer Generator nach Anspruch 5, **dadurch gekennzeichnet, dass** die Primärantriebsübertragungseinrichtung (45, 46, 81) eine erste Primärübertragungseinrichtung (45, 81) aufweist, wobei die erste Primärübertragungseinrichtung (45, 81) eine erste in eine Richtung wirksame Antriebsübertragungseinrichtung (53a, 87) besitzt, die dazu ausgebildet ist, Antriebskraft durch diese hindurch von dem Zylinder (15) auf die Schwungscheibe (43) in der nur einen Drehrichtung zu übertragen.

7. Wasserbetriebener elektrischer Generator nach Anspruch 5 oder 6, **dadurch gekennzeichnet, dass** die Primärantriebsübertragungseinrichtung (45, 46, 81) eine zweite Primärübertragungseinrichtung (46) aufweist, wobei die zweite Primärübertragungseinrichtung (46) eine zweite in eine Richtung wirksame Antriebsübertragungseinrichtung (53b) besitzt, die dazu ausgebildet ist, Antriebskraft durch diese hindurch von dem Zylinder (15) auf die Schwungscheibe (43) in der nur einen Drehrichtung zu übertragen, wenn sich der Zylinder (15) in eine Drehrichtung dreht, die entgegengesetzt ist zu der Drehrichtung des Zylinders (15) bei der durch die erste Primärübertragungseinrichtung (45, 81) Antriebskraft von dem Zylinder (15) auf die Schwungscheibe (43) übertragen wird.

8. Wasserbetriebener elektrischer Generator nach einem der vorhergehenden Ansprüche, **dadurch gekennzeichnet, dass** die Antriebsübertragungseinrichtung (43, 45, 46, 60, 74, 81, 93) eine Sekundärantriebsübertragungseinrichtung (60, 74, 93) zum Übertragen von Antriebskraft von der Schwungscheibe (43) auf die Stromerzeugungseinrichtung (33, 71, 72, 92) aufweist.

9. Wasserbetriebener elektrischer Generator nach Anspruch 8, **dadurch gekennzeichnet, dass** die Stromerzeugungseinrichtung (33, 71, 72, 92) einen ersten Stromerzeugungsgenerator (33, 71, 92) aufweist, und die Sekundärantriebsübertragungseinrichtung (60, 74, 93) eine erste Sekundärübertragungseinrichtung (60, 93) aufweist, wobei der erste Stromerzeugungsgenerator (33, 71, 92) durch die erste Sekundärantriebsübertragungseinrichtung (60, 93) angetrieben wird.

10. Wasserbetriebener elektrischer Generator nach Anspruch 8 oder 9, **dadurch gekennzeichnet, dass** die Stromerzeugungseinrichtung (33, 71, 72, 92) einen zweiten Stromerzeugungsgenerator (72) aufweist, und die Sekundärantriebsübertragungseinrichtung (60, 74, 93) eine zweite Sekundärübertragungseinrichtung (74) aufweist zum Übertragen von Antriebskraft von der Schwungscheibe (43) auf den zweiten Stromerzeugungsgenerator (72).

11. Wasserbetriebener elektrischer Generator nach einem der vorhergehenden Ansprüche, **dadurch gekennzeichnet, dass** der Zylinder (15) in dichtender Anlage mit der Hauptwelle (9) auf dieser drehbar ist.

12. Wasserbetriebener elektrischer Generator nach einem der vorhergehenden Ansprüche, **dadurch gekennzeichnet, dass** eine Umwandlungseinrichtung (28, 29, 100, 131) zusammen mit dem Zylinder (15) betreibbar ist, um Bewegung von Wasser entweder in die Schwingungsbewegung oder die Drehbewegung des Zylinders (15) umzuwandeln.

13. Wasserbetriebener elektrischer Generator nach Anspruch 12, **dadurch gekennzeichnet, dass** die Umwandlungseinrichtung (28, 29, 100, 131) aufweist: mindestens eine schwenkbar auf der Außenseite des Zylinders (15) getragene Klappe (100) und/oder mindestens ein um eine Drehachse drehbares Rotorblatt (131), wobei das mindestens eine Rotorblatt (131) betriebsmäßig mit dem Zylinder (15) verbunden ist, um entweder die Schwingungsbewegung oder die Drehbewegung in dem Zylinder (15) hervorzurufen, und/oder ein auf einem ersten Trägerarm (28) getragenes, mit den Wellen zusammenwirkendes Element (29), das sich von dem Zylinder (15) aus erstreckt und starr mit diesem verbunden ist.

14. Wasserbetriebener elektrischer Generator nach einem der vorhergehenden Ansprüche, **dadurch gekennzeichnet, dass** die Hauptwelle (9) drehfest auf einer Haltestruktur (3, 111) gelagert ist, wobei die Haltestruktur (3, 111) entweder auf einer schwimmfähigen Anordnung (4) oder einer halbtauchfähigen Anordnung (111) oder auf einer tauchfähigen Anordnung getragen wird.

15. Wasserbetriebener elektrischer Generator nach einem der vorhergehenden Ansprüche, **dadurch gekennzeichnet, dass** eine Stabilisierungseinrichtung (121, 122) vorgesehen ist, um den Zylinder (15) in den Wogen zu stabilisieren.

## Revendications

1. Générateur électrique alimenté par de l'eau comprenant un tambour (15) monté en rotation sur un arbre principal non rotatif (9) autour d'un axe de rotation principal (23), et pouvant être configuré pour osciller ou tourner autour de l'axe de rotation principal (23) en réponse à un mouvement de l'eau, un moyen porteur (34, 35, 36, 37) supporté de manière rigide sur l'arbre principal (9) dans le tambour (15) portant un moyen de génération de puissance électrique (33, 71, 72, 92), et un moyen de transmission d'entraînement (43, 45, 46, 60, 74, 81, 93) couplant de manière fonctionnelle le tambour (15) au moyen de génération de puissance électrique (33, 71, 72, 92) pour transmettre un entraînement du tambour (15) au moyen de génération de puissance électrique (33, 71, 72, 92) en réponse au mouvement de rotation ou d'oscillation du tambour (15) sur l'arbre principal (9), **caractérisé en ce que** le moyen de transmission d'entraînement (43, 45, 46, 60, 74, 81, 93) comprenant un volant (43) monté en rotation sur l'arbre principal (9).

2. Générateur électrique alimenté par de l'eau tel que revendiqué dans la revendication 1, **caractérisé en ce que** le moyen de transmission d'entraînement (43, 45, 46, 60, 74, 81, 93) est configuré pour entraîner le moyen de génération de puissance électrique (33, 71, 72, 92) dans une seule direction de rotation.

3. Générateur électrique alimenté par de l'eau tel que revendiqué dans la revendication 1 ou 2, **caractérisé en ce que** le moyen de transmission d'entraînement (43, 45, 46, 60, 74, 81, 93) est configuré pour entraîner le moyen de génération de puissance électrique (33, 71, 72, 92) dans une seule direction de rotation en réponse au mouvement d'oscillation ou de rotation du tambour (15) dans les deux directions de rotation.

4. Générateur électrique alimenté par de l'eau tel que revendiqué dans l'une des revendications précédentes, **caractérisé en ce que** le volant (43) est situé dans le tambour (15).

5. Générateur électrique alimenté par de l'eau tel que revendiqué dans l'une des revendications précédentes, **caractérisé en ce que** le moyen de transmission d'entraînement (43, 45, 46, 60, 74, 81, 93) comprend un moyen de transmission d'entraînement primaire (45, 46, 81) destiné à transmettre un entraînement du tambour (15) au volant (43).

6. Générateur électrique alimenté par de l'eau tel que revendiqué dans la revendication 5, **caractérisé en ce que** le moyen de transmission d'entraînement primaire (45, 46, 81) comprend un premier moyen de transmission primaire (45, 81), le premier moyen de transmission primaire (45, 81) comprenant un premier moyen de transmission d'entraînement unidirectionnel (53a, 87) adapté pour transmettre, à travers celui-ci, un entraînement du tambour (15) au volant (43) dans une seule direction de rotation.

7. Générateur électrique alimenté par de l'eau tel que revendiqué dans la revendication 5 ou 6, **caractérisé en ce que** le moyen de transmission d'entraînement primaire (45, 46, 81) comprend un deuxième moyen de transmission primaire (46), le deuxième moyen de transmission primaire (46) comprenant un deuxième moyen de transmission d'entraînement unidirectionnel (53b) adapté pour transmettre, à travers celui-ci, un entraînement du tambour (15) au volant (43) dans une seule direction de rotation lorsque le tambour (15) tourne dans une direction de rotation opposée à la direction de rotation du tambour (15), durant quoi l'entraînement est transmis du tambour (15) au volant (43) par le premier moyen de transmission primaire (45, 81).

8. Générateur électrique alimenté par de l'eau tel que revendiqué dans l'une des revendications précédentes, **caractérisé en ce que** le moyen de transmission d'entraînement (43, 45, 46, 60, 74, 81, 93) comprend un moyen de transmission d'entraînement secondaire (60, 74, 93) destiné à transmettre un entraînement du volant (43) au moyen de génération de puissance électrique (33, 71, 72, 92).

9. Générateur électrique alimenté par de l'eau tel que revendiqué dans la revendication 8, **caractérisé en ce que** le moyen de génération de puissance électrique (33, 71, 72, 92) comprend un premier générateur de puissance électrique (33, 71, 92), et le moyen de transmission d'entraînement secondaire (60, 74, 93) comprend un premier moyen de transmission secondaire (60, 93), le premier générateur de puissance électrique (33, 71, 92) étant entraîné par le premier moyen de transmission d'entraînement secondaire (60, 93).

10. Générateur électrique alimenté par de l'eau tel que revendiqué dans la revendication 8 ou 9, **caractérisé en ce que** le moyen de génération de puissance électrique (33, 71, 72, 92) comprend un deuxième générateur de puissance électrique (72), et le moyen de transmission d'entraînement secondaire (60, 74, 93) comprend un deuxième moyen de transmission secondaire (74) destiné à transmettre un entraînement du volant (15) au deuxième générateur de puissance électrique (72).

11. Générateur électrique alimenté par de l'eau tel que revendiqué dans l'une des revendications précédentes, **caractérisé en ce que** le tambour (15) peut tourner de manière étanche sur l'arbre principal (9).

12. Générateur électrique alimenté par de l'eau tel que revendiqué dans l'une des revendications précédentes, **caractérisé en ce qu'**un moyen de conversion (28, 29, 100, 131) peut coopérer avec le tambour (15) pour convertir le mouvement de l'eau en un mouvement d'oscillation ou de rotation du tambour (15).

13. Générateur électrique alimenté par de l'eau tel que revendiqué dans la revendication 12, **caractérisé en ce que** le moyen de conversion (28, 29, 108, 131) comprend l'un(e) d'au moins un volet (100) porté en pivotement sur la partie extérieure du tambour (15), d'au moins une nervure formant aile (131) adaptée pour tourner autour d'un axe de rotation, l'au moins une nervure formant aile (131) étant couplée de manière fonctionnelle au tambour (15) pour entraîner un mouvement d'oscillation ou de rotation dans le tambour (15), et un élément de contact avec les vagues (29) porté sur un premier bras de support (28) s'étendant à partir du tambour (15) et lui est couplé de manière rigide.

14. Générateur électrique alimenté par de l'eau tel que revendiqué dans l'une des revendications précédentes, **caractérisé en ce que** l'arbre principal (9) est supporté de manière non rotative sur une structure de support (3, 111), la structure de support (3, 111) étant portée sur l'une d'une structure flottante (4), d'une structure semi-submersible (111) et d'une structure submersible.

15. Générateur électrique alimenté par de l'eau tel que revendiqué dans l'une des revendications précédentes, **caractérisé en ce qu'**un moyen de stabilisation (121, 122) est prévu pour stabiliser le tambour (15) dans les vagues.
